# EUROPÄISCHE PATENTSCHRIFT

(11) **EP 2 630 841 B1**
(45) Veröffentlichungstag und Bekanntmachung des Hinweises auf die Patenterteilung: **08.07.2015**
(21) Anmeldenummer: 11781753.6
(22) Anmeldetag: 06.10.2011
(51) Int. Cl.: H05B 7/148

(54) **VERFAHREN UND VORRICHTUNG ZUR REGELUNG DES ELEKTRODENABSTANDS IN EINEM VAKUUM-LICHTBOGENOFEN**
METHOD AND APPARATUS FOR CLOSED-LOOP CONTROL OF THE ELECTRODE SEPARATION IN A VACUUM ARC FURNACE
PROCÉDÉ ET DISPOSITIF DE RÉGLAGE DE L'ÉCARTEMENT DES ÉLECTRODES DANS UN FOUR À ARC SOUS VIDE

(30) Priorität: 21.10.2010 DE 102010042782
(43) Veröffentlichungstag der Anmeldung: 28.08.2013
(73) Patentinhaber: ALD Vacuum Technologies GmbH, 63450 Hanau (DE)
(72) Erfinder: OEHLER, Ralf, 64289 Darmstadt (DE); SCHOLZ, Harald, 63517 Rodenbach (DE); HOFFMANN, Frank-Werner, 63654 Büdingen (DE)
(74) Vertreter: advotec.
(86) Internationale Anmeldenummer: PCT/EP2011/067483
(87) Internationale Veröffentlichungsnummer: WO 2012/052302

(56) Entgegenhaltungen:
- US-A- 4 578 795
- US-A- 4 881 239
- US-A- 5 708 677
- US-A- 5 930 284
- US-A- 6 115 404

## Beschreibung

Die vorliegende Erfindung betrifft ein Verfahren und eine Vorrichtung zur Regelung des Elektrodenabstands in einem Vakuum-Lichtbogenofen, wobei ein Elektrodenabstand einer Schmelzelektrode gegenüber der Oberfläche eines Schmelzgutes in Abhängigkeit einer Tropfenkurzschlussrate geregelt wird.

Die Vakuum-Lichtbogenschmelze ist ein sekundärer Schmelzprozess zur Herstellung von qualitativ hochwertigen Metallrohlingen mit gesteigerten chemischen und mechanischen Eigenschaften des Umschmelzmaterials. Das Vakuum-Lichtbogenumschmelzverfahren wird insbesondere zur Herstellung von Materialien für den Flugzeugbau sowie für Raumfahrt- und biomedizinischen Anwendungsgebiete eingesetzt.

In einem Vakuum-Lichtbogenschmelzofen erstreckt sich eine Elektrode zu einem Tiegel hin und wird durch Anlegen einer elektrischen Spannung zwischen Elektrode und Tiegel in einer Vakuum- oder Niederdruckatmosphäre abgeschmolzen, wobei das flüssige Material sich am Tiegelboden sammelt. Ein solcher Lichtbogenschmelzofen wird insbesondere zum Schmelzen von sogenannten refraktorischen aktiven Elementen wie Titan oder Zirkon sowie für die Herstellung rostfreier Stähle und Hochtemperaturlegierungen verwendet. Die dabei angelegten Spannungen bewegen sich üblicherweise zwischen 10 bis 30 Volt, wobei mehrere tausend Ampere an Gleich- oder Wechselstrom fließen, um einen kontinuierlichen Schmelzprozess aufrechtzuerhalten. Der Tiegel ist gewöhnlich durch eine Wasserisolierung gekühlt, um die Abschmelzrate zu steuern. Im Laufe des Abschmelzens muss die Elektrode gegenüber dem Schmelzgut nach unten geführt werden, um einen homogenen Schmelzabstand zwischen Schmelzgutoberfläche und Abschmelzelektrode zu erhalten. Da aufgrund der prozesstechnischen Gegebenheiten keine direkte Abstandsmessung möglich ist, sind verschiedene Verfahren bekannt, indirekt den Elektrodenabstand zu bestimmen und zu regeln.

So ist aus dem Stand der Technik bekannt, die Häufigkeit von Kurzschlüssen innerhalb eines bestimmten Bereichs zu bestimmen und deren Anzahl durch Abstandsregelung konstant zu halten. Die Häufigkeit der auftretenden Kurzschlüsse wird dem Elektrodenabstand gleichgesetzt. Durch eine verbesserte Abstandsregelung können auftretende Materialverunreinigungen, insbesondere sogenannte "White Spots" verringert werden. Dabei handelt es sich um Mischkristallbereiche, die beim Aushärten an Legierungselemente wie z. B. Niob oder Titan verarmen aber an anderen Materialien beispielsweise Nickel angereichert sind. Sie bilden sich aufgrund der Erstauungsbedingungen als Dendriten im Kernlunker der Elektrode oder als Schelf beim Umschmelzen an der Tiegelwand und können während des Umschmelzens in den Schmelzsumpf fallen, wobei sie dort nicht mehr aufschmelzen. Sie können bis in das Fertigbauteil gelangen und können Sicherheit und Haltbarkeit der Bauteile negativ beeinflussen. Zur Vermeidung solcher "White Spots" kann eine gleichmäßige und ungestörte Abstandsregelung der Elektrode zur Tiegelschmelzoberfläche eingehalten werden, die in Verbindung mit der Tiegelkühlung die Qualität des Schmelzguts erhöht. Hierdurch kann eine Verringerung einer sogenannten "Lippe", d. h. einer Torusbildung an der Spitze der Elektrode und die Entstehung sogenannter Zweiphasengebietc potentieller Erstarrungs-"White Spots" und potentieller dendritischer "White Spots" verringert werden, sowie die Größe des Schrumpfungsspalts des Erstarrungsgutes im Tiegel kontrolliert werden. Eine verbesserte Abstandsregelung führt somit zu einer höheren Qualität des Umschmelzgutes.

Die US 4,578,795 A zeigt ein Verfahren zur Regelung des Elektrodenabstands in einem Vakuum-Lichtbogenofen, bei dem die Anzahl der Tropfenkurzschlüsse durch Überwachung der Anoden-Kathoden-Spannungseinbrüche detektiert wird. Die der Dauer der Tropfenkurzschlüsse entsprechenden Spannungseinbrüche werden in einem Elektrodenabstands-Modell zur Regelung des Elektrodenabstands herangezogen.

Aus der DE 3544005 C ist ein Verfahren zur Regelung des Abstands zwischen Schmelzelcktrode im Vakuum-Lichtbogenofen bekannt, bei der die Häufigkeit der durch Tropfen entstehenden Kurzschlüsse zwischen der Schmelzelektrode und der Oberfläche des Schmelzgutes als Regelkriterium herangezogen wird. Es wird ein Regler verwendet, der ein Tropfenfolgesollwertsignal gegenüber einem Tropfenfolgenistwert vergleicht, wobei der Ist-Wert in einem vorgegebenen Zeitintervall durch Bestimmung der Tropfenrate bestimmt wird. Das Verfahren wird über den gesamten

Umschmelzvorgang angewendet, wobei nur eine bestimmte weitgefasste Art von Tropfen berücksichtigt wird.

In existierenden Abstandsregelverfahren wird die Tropfenkurzschluss-Triggerschwelle >4 V, insbesondere >8 V und der Tropfenlängen von 0.1 ms bis 200ms mittels eines einfachen Schmitt-Triggers erfasst und nahezu alle messtechnisch erfassten Kurzschlüsse zur Abstandsregelung herangezogen. Empirische Untersuchungen ergeben allerdings, dass in verschiedenen Phasen des Umschmelzprozesses verschiedene Arten von Tropfen dominant auftreten, wobei je nach Umschmelzphase und Umschmelzbedingungen die verschiedenen auftretenden Tropfenkurzschlüsse unterschiedlich gut zur Regelung des Elektrodenabstands geeignet sind. Die aus dem Stand der Technik bekannten Verfahren berücksichtigen jedoch keine unterschiedlichen Typen von Tropfenkurzschlüssen und unterscheiden beispielsweise nicht zwischen bestimmten Tropfenkurzschlussarten. Treten beispielsweise bei Elektroden mit bestimmten Durchmessern oder bei bestimmten Legierungen nur wenig bzw. nicht verwertbare Tropfenkurzschlüsse auf, so ist das aus dem Stand der Technik bekannte Verfahren unbrauchbar. Üblicherweise werden Spannungseinbrüche im Bereich 4 bis 10 Volt und länger als 100µs betrachtet. Allerdings hat sich gezeigt, dass bei bestimmten Elektrodendurchmessern oder bei bestimmten Legierungen häufig nur Tropfenkurzschlüsse im Bereich < 0.1 ms auftreten bzw. Spannungseinbrüche der Gleichspannung von < 8 Volt bzw. > 1 Volt auftreten, wobei diese zu Regelungszwecken üblicherweise nicht betrachtet werden. Insbesondere bei hohen Stromstärken treten großen Tropfen nur selten auf, so dass in diesen Fällen eine Regelung basierend auf konventionellen Messbereichen nachteilig ist. Die Detektion von außerhalb des konventionellen Messbereichs liegenden Tropfenkurzschlüssen, insbesondere kleiner Tropfen, die durch eine Spannungs- und Strommessung erfolgt, konnte unter den elektrisch gesehen schwierigen Bedingungen auf Basis der bisher verwendeten Regeltechniken während des Umschmelzverfahrens nur ungenau vorgenommen werden, da zum einen die eingesetzten Sensoren nicht empfindlich genug waren, zum anderen das Stromnetz eine stark störungsbelastete Schmelzspannung liefert, so dass eine gezielte Erfassung kleiner Tropfen insbesondere bei einem heterogenen Stromnetz mit vielen hochstromigen Verbrauchern im Umfeld des Umschmelzofens eine gezielte Erfassung erschwert wurde.

Bei schwankenden oder zu geringen bzw. zu großen Abständen zwischen Elektrode und Schmelzgutoberfläche läuft der Umschmelzprozess unruhig, wobei qualitative Verschlechterungen des Umschmelzgutes, wie beispielsweise eine inhomogene Blockoberfläche, eine erhöhte Anzahl von Verunreinigungseinschlüsse, eine schwankende Schmelzrate und eine vermehrte Zahl von "White Spots" auftreten. Ist der Abstand zwischen Elektrode und Schmelzgutoberfläche zu hoch, schmilzt der Lichtbogen den Fuß der seitlichen Krone an, die dazu neigt bei Verlust der Fußstabilität in den Schmelzsumpf zu kippen. Weiterhin wächst oder verringert sich die Lippe der Elektrode mit variierendem Lichtbogenabstand, so dass Steigerungen entstehen können und unkontrollierte Pendelbewegungen mit resultierenden Erstarrungsfehlern die Folge sind. Hierdurch kann es auch zu einem erhöhten Verlust von Legierungselementen kommen.

Eine Aufgabe der Erfindung ist es daher, ein verbessertes Regelungsverfahren und eine Regelungsvorrichtung vorzuschlagen, die eine hochpräzise Abstandsregelung der Elektrode in einem Vakuum-Lichtbogenofen ermöglicht, so dass eine verbesserte Qualität des Umschmelzgutes erreicht werden kann.

Diese Aufgabe wird durch ein Verfahren und eine Vorrichtung nach der Lehre der unabhängigen Ansprüche gelöst. Vorteilhafte Weiterbildungen sind Gegenstand der Unteransprüche.

Erfindungsgemäß wird ein Verfahren zur Regelung des Elektrodenabstands in einem Vakuum-Lichtbogenofen vorgeschlagen, wobei ein Elektrodenabstand einer Schmelzelektrode gegenüber der Oberfläche eines Schmelzgutes in Abhängigkeit einer Tropfenkurzschlussrate geregelt wird. Im Rahmen des Verfahrens wird ein Histogramm detektierter Tropfenkurzschlüsse auf Basis zumindest eines Tropfenkurzschlusskriteriums erstellt, das Histogramm in Teilbereiche unterteilt, ein charakteristischer Teilbereich des Histogramms zu Regelungszwecken ausgewählt und eine Elektrodenabstand auf Basis der dem ausgewählten Teilbereich zuordenbaren Tropfenkurzschlüssen geregelt.

Tropfenkurzschlüsse können beispielsweise durch hochgenaue Strom-/Spannungsmessungen detektiert und in einem Histogramm dargestellt werden. Das Histogramm teilt die Art der auftretenden Tropfenkurzschlüsse hinsichtlich zumindest eines Tropfenkurzschlusskriteriums auf und bildet eine Häufigkeitsverteilung bezüglich dieses Kurzschlusskriteriums ab. Das Histogramm ist in mehrere Teilbereiche unterteilt, die gleichabständig aber auch variabel breit sein können, insbesondere können zumindest zwei Teilbereiche ausgedeutet werden. Nach Analyse der Häufigkeitsverteilung kann in diesen Teilbereichen ein charakteristischer Teilbereich des Histogramms zu Regelungszwecken ausgewählt werden und der Elektrodenabstand kann auf Basis der diesem Teilbereich zuordenbaren Kurzschlüssen zumindest phasenweise geregelt werden. Somit wird eine Elektrodenabstandsregelung nicht auf Basis aller auftretender Tropfenkurzschlüsse unspezifisch vorgenommen, sondern die Tropfenkurzschlüsse werden kategorisiert, zumindest hinsichtlich eines Kriteriums in einem Histogramm dargestellt und lediglich ein Teilbereich der Tropfenkurzschlüsse, der einen Bruchteil der auftretenden Kurzschlüsse hinsichtlich dieses einen oder mehrere Kriterien darstellt, wird herausgenommen, und die Regelung wird auf Basis dieser Unterteilmenge der auftretenden Tropfenkurzschlüsse vorgenommen. Somit wird ein Filterkriterium angelegt, und es werden nur diejenigen Tropfenkurzschlüsse zur Regelung herangezogen, die in der entsprechenden Umschmelzphase der Elektrode optimal für eine Elektrodenabstandsregelung geeignet sind. Ermöglicht werden kann dies durch den Einsatz hochsensitiver Strom- und/oder Spannungsmessverfahren sowie schneller Rechner, die eine genauere Detektion von Tropfenkurzschlüssen, insbesondere von durch kleine Tropfen verursachten Kurzschlüssen, ermöglicht. Eine Regelung bezogen auf einen anderen Teilbereich, insbesondere bezüglich kleiner Tropfen, führt in vielen Fällen zu einem geänderten Regelverhalten, wobei durchaus verbesserte Umschmelzergebnisse erreicht werden können.

Die Auswahl des Teilbereichs und des Tropfenkurzschlusskriteriums kann Erfahrungswert basiert vorgenommen werden, allerdings auch automatisch erfolgen und adaptiv an die jeweilige Umschmelzphase angepasst sein. Das Histogramm bildet eine statistische Verteilung der Tropfensignalhäufigkeit ab, die beispielsweise in Dauer, Form und Amplitude der Tropfenkurzschlüsse unterteilt sein kann. Dabei können Kurzschlüsse auch in Bereichen erfasst werden, die deutlich unter oder über denen konventioneller Tropfenkurzschlussregelungen liegen. Die Tropfenkurzschlusssignale unterscheiden sich in bestimmten Schmelzsituationen in ihrem Verhalten und Auftreten gegenüber den üblicherweise berücksichtigten Signalen und ermöglichen eine bessere und schnellere Regelung, wobei eine Selektion und Gewichtung der Tropfenraten in bestimmten Schmelzsituationen vorgenommen werden kann. In bestimmten Schmelzsituationen treten beispielsweise Tropfen auf, die wesentlich häufiger sind, als diejenigen, die im konventionellen Erfassungsbereich liegen. Durch Berücksichtigung dieser auffällig häufig auftretenden Tropfenarten und Fokussierung der Regelung auf die auftretenden Tropfenteilbereiche kann eine schnellere Reaktion und eine verbesserte Abstandsregelung ermöglicht werden. Beispielsweise kann eine Unterscheidung zwischen kleinen und großen Tropfen getroffen werden, wobei die kleinen Tropfen kurze, schnelle Spannungseinbrüche und die dicken Tropfen starke, lange Spannungsabsenkungen bedeuten. Die Tropfenfrequenz spiegelt sich beispielsweise in einer statistischen Verteilung der Tropfenrate nach kleinen und großen Tropfen wieder. Dabei können beispielsweise die kleinen Tropfenkurzschlüsse 5 - 100 mal kleiner sein als die großen Tropfenkurzschlüsse, wobei eine präzise messtechnische Erfassung der Tropfencharakteristika in allen denkbaren Messbereichen erforderlich ist. Auch treten empirisch feststellbar sogenannte Tropfenschauer auf, aus denen wertvolle Informationen über den Elektrodenabstand extrahierbar sind. Diese treten in unregelmäßigen Zeitabständen in jeder Phase des Umschmelzvorgangs, beispielsweise minütlich auf, und erfolgen hochfrequent, so dass sie von konventionellen Abstandsregelverfahren meist ignoriert worden sind. Hierbei beschreiben verschiedene Tropfenarten unterschiedliche physikalische Vorgänge, beispielsweise große Tropfen ein Umschmelzen einer großen Menge Elektrodenmaterials von etwa 1 cm³ und eine Vielzahl kleiner Tropfen über einen längeren Zeitraum ein kontinuierliches Umschmelzen, das durch einen Tropfenschauer von Elektrodenmaterial bewirkt wird. Lichtbögen erzeugen ähnliche Spannungssignaturen wie Tropfensignaturen, die einer bestimmten Tropfenart zuordenbar sind. Bei der Veränderung der Tropfen, insbesondere von großen auf kleine Tropfen ist bemerkenswert, dass zwar die Häufigkeit der Tropfen im Verhältnis zur Größe variiert, wobei eine Gesamtmenge des abtropfenden Materials nahezu konstant erscheint.

Im Gegensatz zu konventionellen Regelungsverfahren, in denen ein Schmitt-Trigger-Schwellwertregler mit konstanter Schwellstufe zur Erkennung von Tropfenkurzschlüssen verwendet wird, können adaptive Schwellstufen und im Hinblick auf verschiedene Tropfencharakteristika einstellbare Regelungsverfahren verwendet werden. Hierbei kann eine Korrelation zwischen dem Auftreten verschiedener physikalischer Vorgänge und dem Auftreten verschiedener Tropfensignaturen genutzt werden, die je nach Schmelz-Situation bestimmte Signaturen besser zur Abstandsregelung nutzbar machen als andere, weil die jeweils korrespondierenden physikalischen Vorgänge ein besseres Maß für den Elektrodenabstand darstellen. Hierzu können die für die Regelung betrachteten Bereiche des Tropfenhistogramms dynamisch ausgewählt werden. Auch können mehrere Histogrammbereiche gleichzeitig erfasst und gemeinsam für eine Regelung - gegebenenfalls gewichtet - betrachtet werden, bzw. Zusatzinformationen aus den mehreren Bereichen ermittelt werden, um die Regelung zu verbessern.

Gemäß einer vorteilhaften Weiterbildung kann zur Auswahl eines charakteristischen Teilbereichs eine Gewichtungsfunktion, bevorzugt in Abhängigkeit der Phase des Umschmelzvorgangs, auf die verschiedenen Teilbereiche angewendet werden, und entsprechend des am stärksten gewichteten charakteristischen Teilbereichs ein vorbestimmbares Regelverhalten, insbesondere eine entsprechende Regelverstärkung und ein entsprechendes Reglerverhalten ausgewählt werden, wonach eine Regelung des Elektrodenabstands auf Basis des ausgewählten Reglerverhalten in Abhängigkeit der dem charakteristischen Teilbereich zuordenbaren Tropfenkurzschlüsse erfolgt. So können nach Auswahl eines charakteristischen Teilbereichs diesem Teilbereich unterschiedliche Regelungsparameter, insbesondere Regelungsverstärkung, Regelungsverhalten (integrales, proportionales oder differentiales Regelverhalten) zugeordnet sein. So kann bezüglich jedes Kriteriums eine Unterteilung in verschiedene Teilbereiche und jedem Teilbereich wiederum ein bestimmter Satz Regelparameter zugeordnet sein. So können kleine hochfrequente Tropfenkurzschlüsse ein schnelleres Regelungsverhalten und beispielsweise ein integrales Reglerverhalten erfordern, wogegen langsame große Tropfenkurzschlüsse eine Proportionalregelung bewirken können. Somit kann eine verbesserte Feineinstellung des Regelverhaltens entsprechend der Art, Umfang und Phase des Umschmelzvorgangs erreicht werden.

Gemäß einer vorteilhaften Weiterbildung kann das Tropfenkurzschlusskriterium zumindest einen Amplitudeneinbruchswert, eine Kurzschlusshäufigkeit, eine Kurzschlussdauer, einen Tropfenzeitabstand oder eine Amplitudenform umfassen, wobei der Kriteriumsparameter in zumindest zwei Teilbereiche unterteilt sein kann. So kann als Tropfenkurzschlusskriterium der Spannungseinbruch der DC-Versorgungsspannung angelegt werden. Dabei kann beispielsweise zwischen einem kleinen Spannungseinbruch von 0 bis 2 Volt und einen großen Spannungseinbruch von 2 bis 10 Volt unterschieden werden. Des Weiteren kann die Häufigkeit oder die Frequenz der Tropfenkurzschlüsse als Kriterium herangezogen werden und beispielsweise zwischen schnellen Tropfen < 0.1 ms und langsamen Tropfen im Bereich 0.1 ms bis 20 ms unterschieden werden. Schließlich kann die Kurzschlusshäufigkeit betrachtet werden, d. h. die Anzahl der sich ereignenden Tropfenkurzschlüsse in einer vorbestimmbaren Zeitdauer, insbesondere einer Zeitdauer die wesentlich kleiner als eine bestimmte Phase des Umschmelzvorgangs sein kann. Korrelierend mit der Kurzschlusshäufigkeit kann der zeitliche Abstand der Tropfen zueinander oder des Abstandes Tropfen eines Kurzschlusskriteriums gegenüber Tropfen eines anderen Kurzschlusskriteriums herangezogen werden, beispielsweise die Häufigkeit zwischen kurzen und langen Tropfenkurzschlüssen. Schließlich können durch Betrachtung der Form des Spannungs- und/oder Stromeinbruches die Amplitudenform des Kurzschlusses charakterisiert werden und zwischen scharfen, steilflankigen Kurzschlüssen und langsam anklingenden oder lang abfallenden Kurzschlüssen unterschieden werden. Hierdurch lässt sich ein mehrdimensionales Histogramm konstruieren, in dem zwei oder mehrdimensionale Tropfenkurzschlussbereiche als charakteristische Kriterienbereiche auswählbar sind. Das Histogramm lässt sich grafisch - gegebenenfalls mehrdimensional - darstellen und kann einem Bediener einen wertvollen Anhaltspunkt über den Elektrodenabstand sowie über die Qualität des Umschmelzvorgangs geben.

Gemäß einer vorteilhaften Weiterbildung der Erfindung kann das Histogramm zumindest zwei Tropfenkurzschlusskriterien abbilden, so dass ein Teilbereich ein zwei- oder mehrdimensionaler Teilbereich ist. Somit kann das Histogramm mehr als ein einziges Kurzschlusskriterium, beispielsweise zwei oder mehrere Kriterien berücksichtigen und ein mehrdimensionales Auswahlfeld zur Auswahl eines Tropfenkurzschlusskriteriums darstellen. So kann beispielsweise der Amplitudeneinbruchswert, die Kurzschlusshäufigkeit sowie die Kurzschlussdauer als Kriterium herangezogen werden und zwischen starken und schwachen Kurzschlüssen, lang andauernden und kurzen Kurzschlüssen sowie einer großen Anzahl und einer niedrigen Anzahl von Kurzschlüssen unterschieden werden, auf deren Basis somit zumindest acht verschiedene Regelungsbereiche zur Regelung des Elektrodenabstand heranzogen werden können. Ein charakteristischer Teilbereich kann beispielsweise durch Erfahrungswerte im Verlauf eines Umschmelzvorgangs vorab festgelegt werden oder an Signifikanzkriterien, beispielsweise erhöhte Anzahl auftretender Kurzschlüsse in einem Teilbereich oder Auftreten signifikanter Kurzschlüsse entsprechend eines betrachtenden Kriteriums ausgewählt werden. Dabei kann ein einziger charakteristischer Teilbereich vor Beginn oder bei Auftreten der ersten Tropenkurzschlüsse festgelegt werden und dieser Teilbereich während des ganzen Umschmelzvorgangs betrachtet werden. Ein zweidimensionales Kurzschlusskriterium ist sehr einfach quasi-dreidimensional darstellbar und zeigt eine schnell zu erfassende komplexe Information über Qualität und Phase des Umschmelzprozesses.

Gemäß einer vorteilhaften Weiterbildung kann jedoch ein charakteristischer Teilbereich bei Beginn oder in vorbestimmbaren Phasen des Umschmelzvorgangs neu ausgewählt werden, wobei bevorzugt eine teilbereichsbezogene Regelung nur in bestimmten Phasen des Umschmelzvorgangs vorgenommen wird. So kann bei Heranfahren der Elektrode an den Schmelztiegel zunächst keine tropfenkurzschlussbasierte Regelung erfolgen, nach Beginn des Umschmelzvorgangs eine Kurzschlussreglung basierend auf großen Tropfen und nach beispielsweise einer anfänglichen Phase des Umschmelzvorgangs eine Umschaltung bezüglich hochfrequenter Tropfen oder anderen Charakteristiken erfolgen. Hierbei können jeweils neue Teilbereiche entsprechend der auftretenden Signifikanz der einzelnen Tropfenkurzschlussraten ausgewählt werden.

Das Histogramm der aufgezeichneten Tropfenkurzschlüsse bildet die Basis des Regelungsverfahrens und kann gemäß einer vorteilhaften Weiterbildung während zumindest einer Phase des Umschmelzvorgangs wiederholt, insbesondere laufend neu erstellt werden, wobei ein charakteristischer Teilbereich zumindest bei einer voreinstellbaren Abweichung der Teilbereiche des neu erstellten Histogramms gegenüber dem bisherigen Histogramm neu ausgewählt werden kann. So kann das Histogramm für die erste Phase des Umschmelzvorgangs vorgegeben werden und eine Einteilung der auftretenden Kurzschlüsse in ein Histogramm erfolgen. Treten vermehrt andere Kurzschlussarten auf, so kann die Unterteilung des Histogramms oder auch die Anzahl der berücksichtigten Kriterien im Histogramm adaptiv geändert und ein neues andersartiges Histogramm erstellt werden, auf deren Basis eine weitere Regelung erfolgen wird. Dies kann zumindest innerhalb einer Phase des Umschmelzvorgangs vorgenommen werden, insbesondere jedoch laufend überprüft werden, ob die bisherige Histogrammeinteilung und Charakteristikastruktur des Histogramms den gegebenen Umschmelzvorgang optimal widerspiegelt oder ob neue Kriterien berücksichtigt werden sollen.

Wird als Tropfenkurzschlusskriterium ein Spannungsamplitudeneinbruchswert als herangezogen, so kann es vorteilhaft sein, den Spannungsamplitudeneinbruchswert in einem Bereich von 1 mV bis 15 Volt, bevorzugt 5 mV bis 6 Volt, insbesondere 1 V bis 3 Volt zu erfassen. Große Spannungsamplitudeneinbruchswerte > 2 Volt deuten auf das Ablösen einer hohen Menge Elektrodenmaterials hin oder das Ausbilden einer Kurzschlussbrücke. Sehr geringe Einbrüche im Bereich von unter 3V, häufig unter 1 V und in manchen Fällen < 5 mV deuten auf herab fallende Elektrodentropfen hin, die bevorzugt für eine Elektrodenabstandsregelung im mittleren Verlauf der Umschmelzphase herangezogen werden sollten. Durch Auswahl eines möglichst großen Spannungsamplitudeneinbruchswertbereichs kann eine Regelung basierend auf den Spannungseinbrüchen sehr genau erfolgen und das Histogramm in mindestens zwei, insbesondere mehrere Teilbereiche unterteilt werden. Als Tropfenkurzschlusskriterium kann auch die Kurzschlussdauer herangezogen werden.

Gemäß einer vorteilhaften Weiterbildung bietet es sich an, die Kurzschlussdauer im Bereich von 0.3 µs bis 300 ms, bevorzugt 3 µs bis 30 ms, insbesondere 10 µs bis 70 µs erfassen. Durch die Erfassung insbesondere geringer Kurzschlussdauern im Mikro bis Millisekundenbereich kann eine extrem genaue Elektrodenabstandsregelung durch Betrachtung ultrakurzer Tropfenkurzschlüsse ermöglicht werden, wobei in allen Phasen des Umschmelzvorgangs eine erhöhte Genauigkeit der Elektrodenabstandsregelung erreichbar ist. So ist eine Tropfen-Typ-Charakterisierung sowie eine messtechnische Isolation eine Rate "kleiner Tropfen" in fast allen Schmelzphasen vorteilhaft.

Als mögliches Tropfenkurzschlusskriterium kann eine Amplitudenform der Tropfenkurzschlüsse betrachtet werden, die beispielsweise aus dem zeitlichen Verlauf des Spannungs- und/oder Stromeinbruches beim Auftreten eines Kurzschlusses abgeleitet werden kann. Hierbei bietet es sich vorteilhaft an, die Amplitudenform durch eine Multiskalendarstellung, insbesondere durch eine Wavelet-Transformation des Tropfenkurzschlusssignals zu beschreiben, wobei die Multiskalendarstellung als Amplitudenformkriterium verwendet werden kann. Eine Multiskalenanalyse ist eine Approximation einer Form mittels einer diskreten Wavelet-Beschreibung, in der zueinander orthogonale Skalierungsfunktionen zur Approximation einer analytischen Funktion herangezogen werden können. Durch Berücksichtigung beliebig vieler Skalierungsfunktionen kann eine kontinuierlich verbesserte Darstellung erreicht werden, wobei eine analytische Funktion durch eine endliche Menge von Skalierungsfunktionen approximiert werden kann. Der entstehende Fehler sinkt global durch Hinzunahme weiterer Skalierungsfunktionen auf feineren Skalen. Die Beschreibung der Amplitudenform durch eine Multiskalendarstellung ermöglicht eine kompakte, schnell erstellbare und vergleichbare digitale Darstellung der Amplitudenform, so dass eine einfache Regelung auf Basis der auftretenden Amplitudenformcharakteristika möglich ist.

Ein Umschmelzvorgang findet in der Regel in einer in Bezug auf das elektrische Versorgungsnetz sehr stark störungsbehafteten Umgebung statt, in denen viele hochstromige Verbraucher zu Einbrüchen im Versorgungsspannungsnetz führen und die Netzversorgungsspannung stark durch Störungen benachbarter elektrischer Verbraucher verunreinigt ist. Ausgehend von der stark gestörten Versorgungsnetzspannung schlägt sich diese auch in der Umschmelzspannung und somit in der Detektion der Tropfenkurzschlüsse auf Basis der Umschmelzspannung bzw. dem Umschmelzstrom nieder. Durch geeignete Filtermaßnahmen können die Störungen des Netzes herausgefiltert werden, so dass bei der Detektion des Tropfensignals eine Berücksichtigung der Versorgungsnetzstörungen vorgenommen werden kann, um ein verbessertes qualitatives Kurzschlusstropfensignal zu erhalten. Mittels dieses Verbesserungsvorschlags kann beispielsweise durch ein Netzstörfilter netzseitige Störungen aus dem Tropfensignal herausgefiltert werden, beispielsweise periodisch auftretende Störungen durch digitale oder analoge Maßnahmen herausgefiltert werden, so dass lediglich durch Tropfenkurzschluss verursachte Störungen in der Versorgungsspannung oder dem auftretenden Elektrodenstrom auf das Auftreten von Tropfenkurzschlüssen analysiert werden muss. Hierdurch kann eine genaue Detektion der Tropfenkurzschlüsse und damit eine verbesserte Regelung erreicht werden. Beispielsweise kann ein Filter auf Basis einer Phasekorrelation von Netzstörungen zur Netzperiode verwendet werden, um periodisch auftretende Störungen auszufiltern.

In einem nebengeordneten Aspekt schlägt die Erfindung eine Vorrichtung zur Regelung des Elektrodenabstands in einem Vakuum-Lichtbogenofen vor, in die eine Tropfenkurzschluss-Detektionsvorrichtung zur Detektion von Tropfenkurzschlüssen und eine Elektrodenabstands-Regeleinrichtung zur Regelung des Elektrodenabstands einer Schmelzelektrode gegenüber der Oberfläche eines Schmelzgutes umfasst, wobei die Regeleinrichtung den Elektrodenabstand in Abhängigkeit der detektierten Tropfenkurzschlüsse regelt. Die Vorrichtung umfasst des Weiteren eine Tropfenkurzschluss-Histogrammeinrichtung zur Verteilung der Kurzschlüsse nach zumindest einem vordefinierbaren Tropfenkurzschlusskriterium in einem Histogramm und eine Teilbereich-Auswahleinrichtung zur Auswahl eines charakteristischen Teilbereichs aus dem Tropfenkurzschluss-Histogramm, wobei die Regeleinrichtung eine Regelung in Bezug auf den dem charakteristischen Teilbereich zuordenbaren Tropfenkurzschlüssen vornehmen kann. Somit geht die Erfindung von einer an sich bekannten Regelungsvorrichtung aus, die den Elektrodenabstand auf Basis detektierter Tropfenkurzschlüsse regelt. Eine Tropfenkurzschluss-Histogrammeinrichtung nimmt eine Einteilung der Tropfenkurzschlüsse nach vorbestimmbaren oder frei wählbaren Tropfenkurzschlusskritierien vor und teilt diese in einem ein- oder mehrdimensionalem Histogramm entsprechend der Kriterien ein, wobei jedes Kriterium zumindest in zwei Teilbereiche unterteilbar ist. Zur Regelung des Elektrodenabstands nimmt eine Teilbereich-Auswahleinrichtung eine Auswahl eines Teilbereichs des Histogramms vor, wobei die Regeleinrichtung eine Regelung auf Basis des ausgewählten Teilbereichs durchführt. Die erfindungsgemäße Regelungsvorrichtung ist geeignet, ein Verfahren nach einen der vorgenannten Ausführungsbeispiele auszuführen und bildet die auftretenden Kurzschlüsse in einem Histogramm ab, wobei der Elektrodenabstand auf Basis eines Teilbereichs des Histogramms geregelt werden kann. Grundsätzlich kann eine bestehende Regelungsvorrichtung durch Erweiterung hinsichtlich einer Histogrammeinrichtung und einer Auswahleinrichtung in eine erfindungsgemäße Regelvorrichtung erweitert bzw. nachgerüstet werden.

Gemäß einer vorteilhaften Weiterbildung der Regelungsvorrichtung kann die Teilbereich-Auswahleinrichtung eine Teilbereichsdefinitionseinheit zur Definition von Tropfenkurzschluss-Teilbereichen des Histogramms und eine Gewichtungsfunktionseinheit zur Gewichtung der Teilbereiche des Histogramms umfassen, so dass ein am stärksten gewichteter Teilbereich als charakteristischer Teilbereich auswählbar ist. Die Teilbereich-Auswahleinrichtung umfasst somit eine Teilbereichdefinitionseinheit, die eine Einteilung des jeweiligen Kriteriums in Teilbereiche vornehmen kann, wobei diese Einteilung je nach Umschmelzphase unterschiedlich ausgewählt werden kann. Des Weiteren kann eine Gewichtungsfunktionseinheit eine Gewichtung der einzelnen Teilbereiche vornehmen, so dass beispielsweise in gewissen Umschmelzphasen oder bei Beginn oder Ende des Umschmelzvorgangs verschiedene Charakteristika stärker als andere gewichtet werden können, so dass eine Regelung verstärkt hinsichtlich dieser Teilbereiche und Kriterien vorgenommen werden kann. Durch Erweiterung der Auswahleinrichtung hinsichtlich einer variablen Definitionseinheit und einer Gewichtungsfunktionseinheit kann eine verbesserte Genauigkeit des Regelverfahrens erreicht werden.

Grundsätzlich kann der Regler auf Basis des ausgewählten Histogrammteilbereichs eine Regelung mit konstanten Regelparametern und Regelcharakteristika vornehmen. Infrage kommen dabei beispielsweise ein P, ein I, ein D, ein PI, ein PT, ein PID oder ein sonstig gearteter Regler, dessen Regelverstärkungsfaktoren Proportionalanteil, Ansprechzeiten Differential- und Intergralverhalten fest vorgegeben sein kann. Entsprechend eines ausgezeichneten Ausführungsbeispiels kann die Vorrichtung eine Regelparameter-Auswahlreinrichtung umfassen, die auf Basis des charakteristischen Teilbereichs einen Satz von Regelparametern, insbesondere Regelverstärkung und Regelverhalten auswählt und der Regeleinrichtung zuweisen kann. Somit kann beispielsweise dynamisch oder vorgegeben jedem Teilbereich eines Histogramms ein Satz von Regelparametern und Regelverhalten zugeordnet werden, und bei Auswahl dieses Teilbereichs als charakteristischer Regelteilbereich der Regler mit vorbestimmten oder wählbaren Regelparametern eingestellt werden, so dass verschiedenartige Regelverhalten auf Basis unterschiedlicher Tropfenkurzschlüsse eingesetzt werden können. Beispielsweise kann bei der Regelung auf Basis von kurzen, schnellen Tropfen ein hoher P-Anteil und ein niedriger Integralanteil gewählt werden, während auf Basis von langsamen, großen Kurzschlusstropfen ein niedriger P-Anteil und ein hoher I-Anteil des Regelverhaltens zugrunde gelegt werden kann. Hierdurch lässt sich insbesondere bei Auswahl eines geänderten Histogrammteilbereichs ein andersartiges Regelungsverhalten einstellen, so dass eine verbesserte Regelung in verschiedenen Umschmelzphasen erreicht werden kann.

Die Netzversorgung in einem Umschmelzbetrieb ist oftmals störbehaftet und den Einflüssen umgebender hochstromiger und schnellschaltender elektrischer Verbraucher ausgesetzt. Diese Störungen schlagen sich bis in die Gleichspannungsversorgung der Elektrodenspannung und der auftretenden Elektrodenströme nieder. Zur verbesserten Tropfenkurzschluss-Detektion kann die Vorrichtung vorteilhafterweise eine Netzspannungsfiltereinheit umfassen, die auftretende Störungen des Versorgungsnetzes bei der Tropfenkurzschlussdetektion unterdrücken kann. Diese Netzspannungsfiltereinheit kann beispielsweise die Netzspannung und die auftretenden Netzströme der umgebenden Verbraucher bestimmen und diese aus dem Tropfenkurzschlusssignal herausrechnen oder periodisch auftretende Störungen eliminieren, da diese nicht statistisch unregelmäßig verteilt wie die auftretenden Kurzschlussströme sind. Durch Ausfiltern von Netzstörungen kann eine verbesserte und genauere Detektion tatsächlicher Tropfenkurzschlüsse ermittelt und hierdurch eine erhöhte Qualität des Elektrodenabstands erreicht werden.

Grundsätzlich ist denkbar, das erfindungsgemäße adaptive Regelungsverfahren in einem Umschmelzverfahren, insbesondere beim Umschmelzen neuer Materialien oder der Inbetriebnahme geänderter Anlageteile inertial ein oder mehrmals auszuführen, das ausgewählte Regelverhalten zu protokollieren und in weiteren Umschmelzvorgängen das aufgezeichnete Regelverhalten im Rahmen einer deterministischen "starren" Regelungsabfolge anzuwenden. Hierdurch kann das erfindungsgemäße Verfahren als "Teach-In" für die Vorgabe eines starren Regelablaufs ausgeführt werden, wodurch ein optimales Reglerverhalten gefunden werden kann, so dass im nachfolgenden ein starres Regelprogramm deterministisch erzielbare Qualitätseigenschaften des Umschmelzproduktes garantiert.

Weitere Vorteile der vorliegenden Erfindung ergeben sich aus der vorliegenden Zeichnungsbeschreibung. In der Zeichnung sind Ausführungsbeispiele der Erfindungen dargestellt. Die Zeichnung, die Beschreibung und die Ansprüche enthalten zahlreiche Merkmale in Kombination. Der Fachmann wird die Merkmale zweckmäßigerweise auch einzeln betrachtet zu sinnvollen weiteren Kombinationen zusammenfassen.

Es zeigen:
- **Fig. 1**: schematisch ein Vakuum-Lichtbogenofen;
- **Fig. 2**: auftretende Fehler beim Vakuum-Lichtbogenumschmelzverfahren;
- **Fig. 3**: eine Lichtbogen-Abstandsregelungsvorrichtung des Stands der Technik;
- **Fig. 4**: Spannungssignale mit auftretenden Tropfenkurzschlüssen;
- **Fig. 5**: Tropfenkurzschlusssignale in verschiedenen Zeitskalen;
- **Fig. 6**: ein Histogramm auftretender Kurzschlüsse;
- **Fig. 7**: ein Ablaufschema eines erfindungsgemäßen Elektrodenabstandsregelverfahren ;
- **Fig. 8**: ein Ausführungsbeispiel einer erfindungsgemäßen

### Elektrodenabstandsregelvorrichtung

In den Figuren sind gleiche oder gleichartige Komponenten mit gleichen Bezugszeichen beziffert.

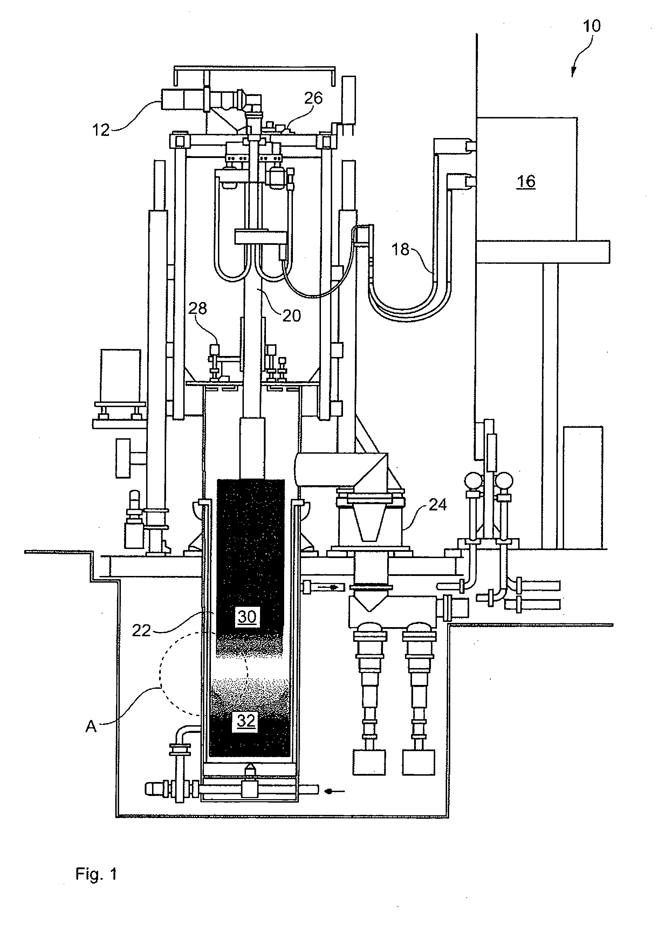

Fig. 1 zeigt schematisch einen Aufbau eines Vakuum-Lichtbogenofens 10. Der Lichtbogenofen 10 umfasst im Wesentlichen eine wassergekühlte Ofenkammer 22, in dem ein Schmelzgut 32 aufgenommen ist. Eine höhenveränderliche Elektrode 30 kann mittels einer Elektrodenvorschubstange 20 und einer Elektrodenantriebsvorrichtung 12 in das Schmelzgut vertikal hineingetaucht oder nach oben gezogen werden. Mittels einer X-Y-Ausrichtungsvorrichtung 26 kann die horizontale Position der Elektrode 30 in der wassergekühlten Ofenkammer 22 ausgerichtet werden. Eine Sensorvorrichtung 28 kann die horizontale und vertikale Elektrodenposition bestimmen. sowie eine Antriebsgeschwindigkeit erfassen. Die wassergekühlte Ofenkammer 22 wird mittels einer Vakuumerzeugungsvorrichtung 24 unter Vakuum oder Niederdruck gesetzt, so dass das Abschmelzen des Elektrodenmaterials in das Schmelzgut 32 ohne atmosphärischen Verunreinigungen durch eine Umgebungsatmsphäre verfolgen kann. Die Elektrode wird mittels Stromzuführungsleitungen 18 durch eine Stromversorgungsvorrichtung 16 bestromt, wobei am Elektrodenende durch Funkenbildung Strom in das Schmelzgut 32 übertragen wird und von dort zurück in die Stromversorgungsvorrichtung 16 zurückfließt. Eine Elektrodenabstands-Regelungvorrichtung regelt die vertikale Vorschubgeschwindigkeit und Position der Antriebsvorrichtung 12 so, dass eine möglichst homogener Abschmelzprozess durchgeführt werden kann. Vorraussetzung für eine tropfenkurzschlussbasierte Regelung ist eine zuverlässige Erkennung von Tropfenkurzschlüssen. Die der Lichtbogenspannung überlagerten impulsartigen Kurzschlüssen können mit Hilfe einer Filter- und Triggerkombination von der Versorgungselektrodenspannung abgespaltet werden.

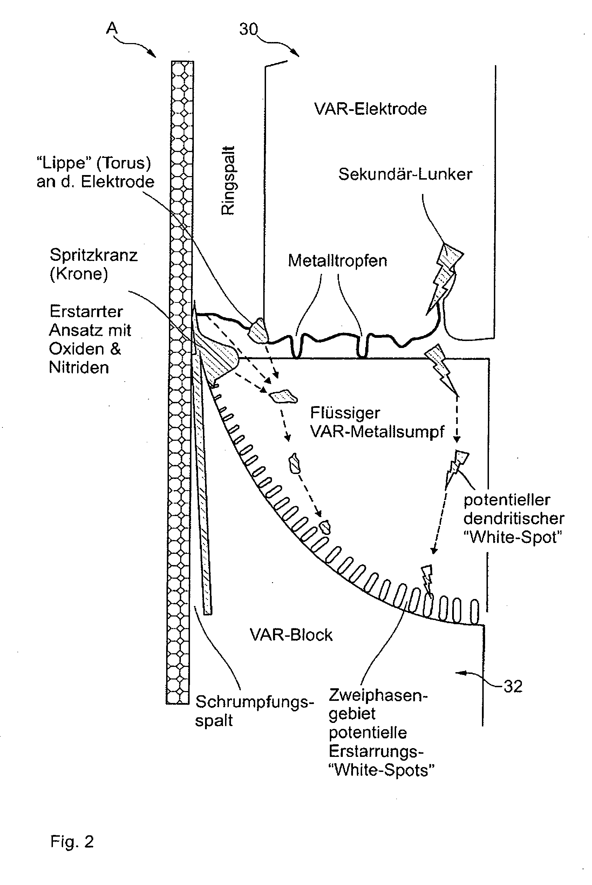

Figur 2 zeigt eine aus dem Stand der Technik bekannte Elektrodenabstands-Regelungsvorrichtung, bei dem der in Fig. 1 dargestellte Vakuum-Lichtbogenofen durch eine Sensor- und Aktormimik mit der Regelvorrichtung verbunden ist. Mittels Sensoren wie Strom- und/oder Spannungsmessinstrumenten, mechanische Weggeber etc. wird eine Umschmelzrate, eine Tropfenratendetektion und eine Elektrodenposition aufgenommen und über einen Daten-BUS an einen Servocontroller für den Elektrodenvorschub weitergeleitet. Diese Daten werden des weiteren einer Umschmelzregelungseinrichtung zugeführt, die eine Elektrodenvorschubregelung sowie eine Echtzeit-Umschmelzregelung und beispielsweise eine Kühlungsregelung der Ofenkammer 22 durchführt.

Schließlich werden die Daten einer Ofen- und Vakuumsregeleinrichtung zugeführt, die beispielsweise Ofentemperatur, Vakuum- und sonstige Einflussparameter im Umschmelzverfahren steuert. Darüber hinaus empfängt und sendet der Daten-BUS Steuerdaten über ein I/O-Interface an Aktuatoren zur Aufrechterhaltung des Vakuums, der Ofentemperatur, des Elektrodenvortriebs und weiterer Stellparameter für den Vakuum-Lichtbogenumschmelzvorgang. Die Umschmelzregelungsreinrichtung und die Ofen- und Vakuums-Regelungseinrichtung sind über ein internes Netzwerk mit einer Bediener-Steuerungs-Konsole verbunden, die eine Speicherperipherie, einen Datenserver und eine Protokollierungseinrichtung umfasst und eine Überwachungseinrichtung zur Überwachung des Umschmelzprozesses beinhaltet, mittels der ein Bediener in einem internen oder externen Netzwerk beispielsweise Remote über den Zustand des Umschmelzverfahrens informiert werden kann, die Parameter protokolliert werden, sowie sonstige Parameter von im Systems angepasst werden können.

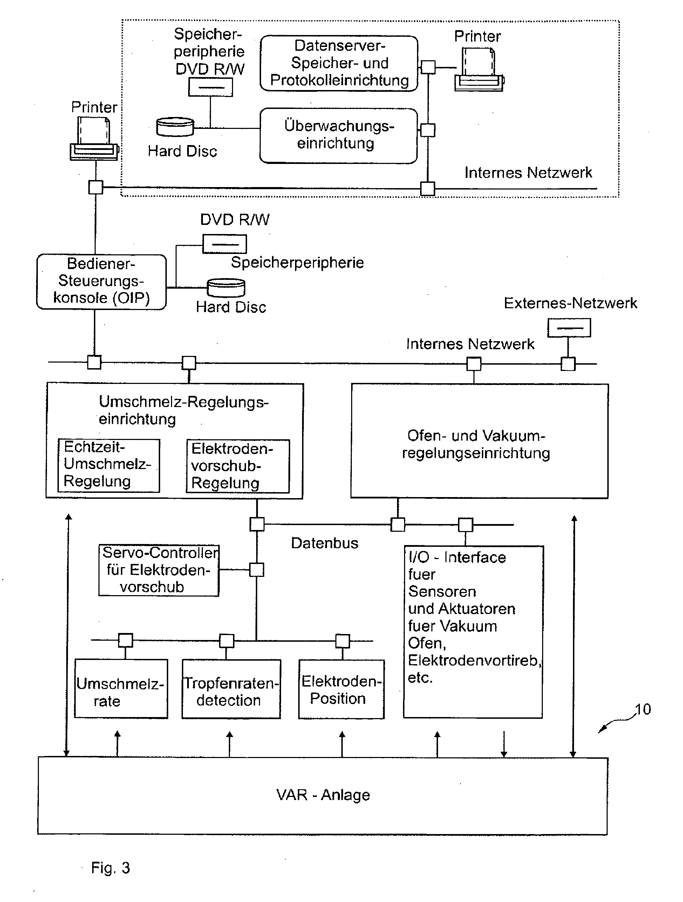

In der Fig. 3 sind typische Materialfehler, die beim Umschmelzverfahren auftreten können, dargestellt. In Fig. 3 ist eine Elektrodenende einer Elektrode 30 dargestellt, die durch Lichtbogenbildung gegenüber dem Schmelzgut 32 verflüssigt wird, wobei einzelne Materialtropfen in das Schmelzgut hinabfallen und so ein Umschmelzverfahren des Elektrodenmaterials durchgeführt wird. Hierbei werden Sekundärlunker innerhalb der Elektrode ebenfalls umgeschmolzen und die darin enthaltenen Fremdstoffe in das Schmelzgut überführt. Am äußeren Rand des Elektrodenendes bildet sich eine sogenannte Lippe oder Torus, bei der die Gefahr besteht, dass Teile abfallen und potentielle diskrete White Spots produziert. Des Weiteren bildet sich an der Außenkante des Schmelzguts gegenüber der Ofenwandung ein Spritzkranz, der als Krone bezeichnet wird, wobei eine Gefahr eines Kurzschlusses bei ungenauer Elektrodenführung zwischen Elektrode und Spritzkranz entsteht. Dieser Spritzkranz beinhaltet festgesetzte Oxide und Nitride. Bei Abkühlung des Schmelzgutes entsteht ein Schrumpfungsspalt gegenüber der Ofenkammer, so dass das erstarrte Schmelzgut leicht aus der Ofenkammer entfernt werden kann. Während des Erstarrungsvorgangs können sich in einem Zweiphasengebiet des flüssigen Schmelzgutes White Spots bilden, die dendritischer Natur sein können. Eine ungenaue Elektrodenführung begünstigt die Entstehung solcher White Spots, die Lippe an der Elektrode kann sich vergrößern sowie der Spritzkranz des Schmelzgutes kann zu gefährlichen Kurzschlüssen und Materialabbrüchen führen. Aus diesem Grund ist eine hochgenaue Elektrodenabstandsregelung erforderlich.

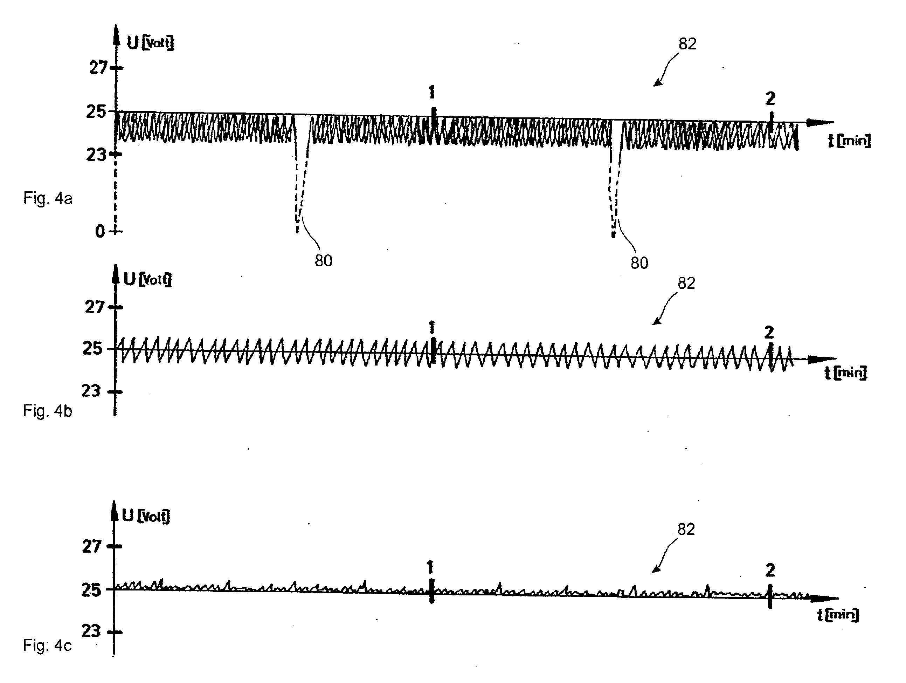

Fig. 4 zeigt typische Spannungsverläufe der Elektrodenspannung im Laufe eines Umschmelzverfahrens während einer Zeit von zwei Minuten. Im Diagramm 4a sind eine hohe Menge kleinerer regelmäßig auftretender Tropfenkurzschlüsse dargestellt, wobei einzelne große Tropfenkurzschlusssignale 80 auf das Herabfallen großer Elektrodenstücke hindeuten. Fig. 4b zeigt das Ergebnis einer hochgenauen Elektrodenabstandsregelung, bei der mittelgroße Tropfen von der Elektrode in das Schmelzgut fallen und eine homogene Verteilung der Elektrodenkurzschlüsse auftritt. In Fig. 4 c sind eine Menge sehr kleiner Tropfenkurzschlüsse festzustellen, wie sie bei einem sehr geringen Abstand zwischen Elektrode und Schmelzgutoberfläche zu erwarten sind. Dennoch treten keine lang andauernden hohen Kurzschlüsse auf, so dass auf eine exakte Elektrodenabstandsregelung zu schließen ist und ein homogener Umschmelzprozess indiziert wird.

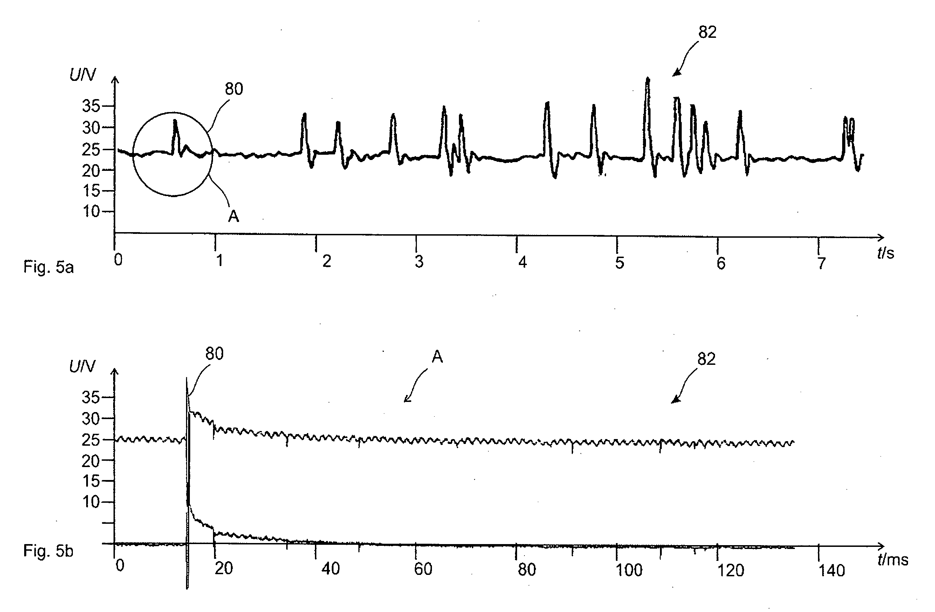

In Fig. 5 ist ein stark gestörtes Elektrodensignal dargestellt, bei der eine große Anzahl verschiedenartiger Kurzschlüsse, insbesondere intensive Tropfenkurzschlüsse 80 auftreten, die auf das Herabfallen großer Materialstücken der Elektrode hindeuten. Fig.5b stellt einen Ausschnitt A des in Fig. 5 a dargestellten Tropfenkürzschlusssignals 82 dar, wobei neben den signifikanten Tropfenkurzschlussamplituden eine hohe Anzahl kleiner Tropfenkurzschlüsse auftreten, so dass eine Regelung bezüglich dieser kleiner Tropfenkurzschlüsse eine wesentlich genauere Elektrodenabstandsregelung ermöglicht.

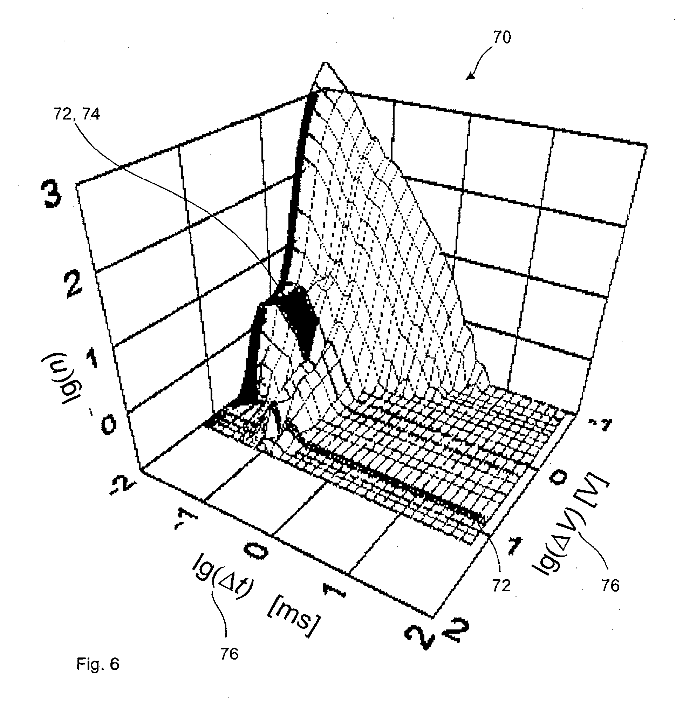

In Fig. 6 ist ein Histogramm auftretender Tropfenkurzschlüsse gemäß zweier Tropfenkurzschlusskriterien, zum einen einem Amplitudeneinbruchswert ΔV zum anderen einer Kurzschlussdauer Δ*t* in logarithmischer Skalierung dargestellt. In z-Richtung ist die Anzahl der Tropfenkurzschlüsse n aufgezeichnet. Hierbei sind zwei charakteristische Teilbereiche 72 schwarz markiert, wobei in einem Teilbereich 72 bei einem konstanten Amplitudeneinbruchswert nur eine geringe Menge charakteristischer Tropfenkurzschlüsse zu verzeichnen sind. In einem zweidimensionalen charakteristischen Teilbereich 72 geringer Amplitudeneinbruchswerte und im Bereich sehr geringer Tropfenkurzschlussdauern, d. h. kleiner hochfrequenter Tropfenkurzschlüsse ist eine signifikante Fläche von Tropfenkurzschlüssen erkennbar, die sich aufgrund ihrer homogenen Verteilung äußerst gut für die Regelung des Elektrodenabstands eignet. Eine Regelung kann dergestalt ausfallen, dass versucht wird, die Menge in diesem Teilbereich auftretenden Tropfenkurzschlüsse möglichst konstant zu halten. Hierdurch kann ein homogenes Umschmelzverfahren sichergestellt werden. Das Histogramm ist durch verschiedene grafische Möglichkeiten einem Bediener leicht darstellbar und kann zur Dokumentation des Umschmelzvorgangs sowie zur Qualitätskontrolle herangezogen werden.

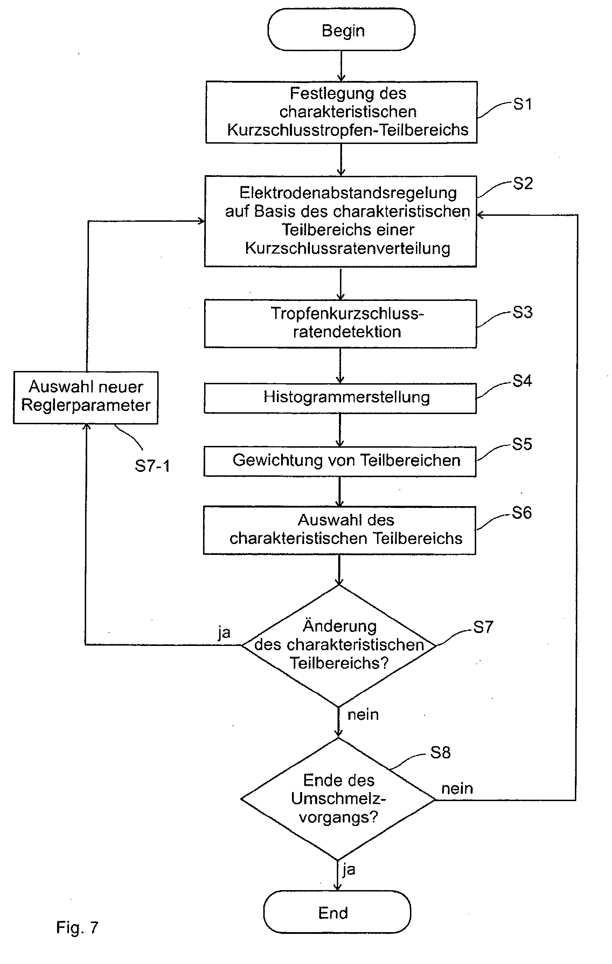

In Fig. 7 ist schematisch ein Ausführungsbeispiel eines Elektrodenabstandregelungsverfahrens nach der Erfindung dargestellt. Hierbei wird im Schritt S1 ein charakteristischer Tropfenkurzschluss-Teilbereich festgelegt und somit das zu berücksichtigende Tropfenkurzschlusskriterium sowie der zu betrachtende Teilbereich definiert. Im Schritt S2 wird eine Elektrodenabstandsregelung auf Basis des charakteristischen Teilbereichs der Kurzschlussratenverteilung vorgenommen, dabei wird versucht, die in dem Teilbereich auftretenden Kurzschlüsse konstant bzw. entsprechend eines vorgegebenen Kurzschlusskriteriums aufrecht zu erhalten. Eine Erhöhung oder Verringerung der Kurzschlüsse in diesem Teilbereich kann dazu führen, dass der Elektrodenabstand vergrößert bzw. verkleinert wird. Im Rahmen der Elektrodenabstandsregelung werden im Schritt S3 Tropfenkurzschlüsse detektiert und ein Histogramm in Schritt S4 erstellt. Dieses Histogramm kann kontinuierlich oder zu bestimmten Abständen neu erstellt werden, wobei im Schritt S5 eine Gewichtung von Teilbereichen des Histogramms vorgenommen wird, die beispielsweise von der Umschmelzphase, der Elektrodenlänge oder der verwendeten Stromstärke bzw. Elektrodenspannung abhängen kann. Auch können Prozessparameter wie Materialart, Ofentemperatur oder sonstigen äußere Parametern berücksichtigt werden. Nach der Gewichtung des Histogramms wird ein charakteristischer Teilbereich im Schritt S6 ausgewählt und im Schritt S7 verglichen, ob sich der charakteristische Teilbereich verändert hat. Falls dies der Fall ist, kann in Schritt S7-1 neue Regelparameter für den Elektrodenabstandsregler in Schritt S2 ausgewählt werden. Falls dies nicht der Fall ist, wird überprüft, ob ein Ende des Schmelzvorgangs vorliegt und falls nicht, wird im Schritt S2 weiterhin der Elektrodenabstand auf Basis des bisherigen Teilbereichs fortgeführt. Ist der Elektrodenumschmelzvorgang beendet, wird das Verfahren beendet und die abgeschmolzene Elektrode aus der Ofenkammer zurückgezogen.

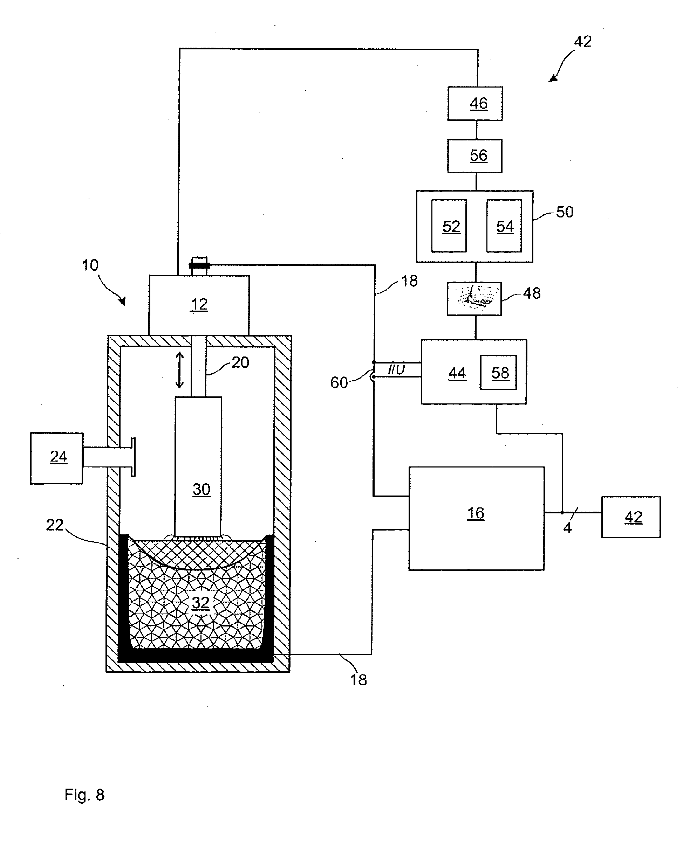

Schließlich zeigt Fig. 8 ein Ausführungsbeispiel einer Regelungsvorrichtung der Erfindung. Am unteren Bereich der Ofenkammer 22 sowie an der Elektrode 30 in Nähe der Elektrodenantriebsvorrichtung 12 sind Klemmen der Stromzuführungsleitung 18 der Umschmelzstromversorgungsvorrichtung 16 angeschlossen. Die Umschmelzstromversorgungsvorrichtung 16 erzeugt einen mehrere tausend Ampere starken Strom zur Umschmelzung der Elektrode 30 in das Schmelzgut 32, wobei die VakuumErzeugungsvorrichtung 34 ein Vakuum oder eine Niederdruckatmosphäre innerhalb der Ofenkammer 22 aufrecht erhält. Die Elektrodenantriebsvorrichtung 12 bewegt die Vorschubstange 20 mit angehängter Elektrode 30 vertikal, so dass ein möglichst gleicher Abstand zur Oberfläche des Schmelzguts 32 aufrechterhalten wird, um ein homogenes Umschmelzen des Elektrodenmaterials zu erreichen. Zur Bestimmung des Elektrodenabstands wird mit Hilfe eines Tropfenkurzschlusssensors 60, in diesem Fall einer Spannungsmessvorrichtung, die angelegte Spannung der Elektrode 30 beobachtet, wobei Spannungseinbrüche als Tropfenkurzschlüsse betrachtet werden, die mit Hilfe einer Tropfenkurzschluss-Detektionseinrichtung 44 erkannt werden. Die Tropfenkurzschlussraten-Detektionseinrichtung 44 umfasst eine Netzspannungsfiltereinheit 58, die die von einem Versorgungsnetz 42 gelieferte Versorgungsspannung beobachtet und Störungen der Versorgungsspannung aus den aufgenommenen Signalen der Stromzuführungsleitungen 18 herausfiltert. Aus dem gefilterten Strom- oder Spannungssignalen können die Tropfenkurzschlüsse mit hoher Genauigkeit detektiert und in einer Tropfenkurzschluss-Histogrammeinrichtung 48 in einem Histogramm dargestellt werden. Auf Basis der Verteilung der Tropfenkurzschlüsse entsprechend einer oder mehrere Tropfenkurzschlusscharakteristika kann durch eine Teilbereichsauswahleinrichtung 50, die eine Teilbereichsdefinitionseinheit 52 und eine Gewichtungsfunktion 54 umfasst, Teilbereiche des Histogramms gewichtet werden, die zuvor mit der Teilbereichsdefinitionseinheit 52 definiert worden sind. Auf Basis der gewichteten Teilbereiche wählt eine Regelparameter-Auswahleinrichtung 56 Regelparameter, wie beispielsweise Linearverstärkung P, Integrationskonstante I oder Totzeit T einer Regeleinrichtung 46 aus und weist diese der Regeleinrichtung 46 zu. Die Regeleinrichtung 46 regelt die Antriebsvorrichtung 12 derart, dass das Auftreten der Tropfenkurzschlüsse in dem charakteristischen Teilbereich konstant oder entsprechend einem vorwählbaren Sollwert angepasst werden kann. Hierdurch kann eine verbesserte Abstandsregelung der Elektrode 30 gegenüber der Oberfläche des Schmelzguts 32 erreicht werden.

Die Erfindung zielt darauf, eine Tropfensignalrate, d. h. Schmelzspannungsschwankungen, die durch das Herunterfallen flüssiger Metalltropfen von der Elektrode anzusehen sind, derart zu regeln, dass unterschiedliche Tropfenkurzschlusssignale betrachtet und je nach Eignung für eine Elektrodenabstandsregelung herangezogen werden können. Aus dem Stand der Technik werden Tropfensignale mittels eines Schmitt-Triggers erfasst, der eine konstante Schwellwerterfassung vornimmt und unabhängig von unterschiedlichen Messbereichen und Tropfenkurzschlusscharakteristika eine Regelung auf Basis statischer Kriterien vornimmt. Zum Beispiel kann der herkömmliche Elektrodenabstandsregler nur messen, wie oft eine Schmelzspannung um ein bestimmtes Maß einbricht, wobei üblicherweise große Bereiche von 4 bis 10 Volt betrachtet werden. In bestimmten Schmelzsituationen, vornehmlich bei hohen Schmelzströmen, treten Tropfen auf, die in einem erweiterten Messbereich liegen, der von einem traditionellen Erfassungsbereich nicht berücksichtigt wird.

Die Erfindung bildet eine statistische Verteilung der Tropfensignalhäufigkeit bezüglich beispielsweise Dauer, Form und Amplitude ab und bildet daraus ein Histogramm, in dem eine oder mehrere geeignete Bereiche ausgewählt werden, auf deren Basis eine Elektrodenabstandsregelung erfolgt. Hierbei kann eine Gewichtungsfunktion die einzelnen Bereiche des Histogramms unterschiedlich gewichten, wobei diese Gewichtungsfunktionen von Schmelzsituation und Histogrammart abhängen kann. Dabei können bisher unzugängliche und unberücksichtigte Tropfenkurzschlussinformationen, wie Zeitbereiche von 1 bis 10 µs oder Spannungseinbrüche von 10 mV bis 4 Volt betrachtet werden. Die Tropfenkurzschlusssignale unterscheiden sich in bestimmten Schmelzsituationen, je nach Schmelzmaterialien oder Vakuum bzw. Temperaturbereichen, deutlich, wobei bisher unberücksichtigte Tropfenkurzschlusssignale eine bessere und schnellere Regelung ermöglichen. Durch eine Selektion und Gewichtung der unterschiedlichen Tropfenkurzschlussraten entsprechend Teilbereichen des Histogramms und unter Berücksichtigung von schnellen und kurzen Signalen kann in bestimmten Schmelzsituationen eine verbesserte Elektrodenabstandsregelung erreicht werden.

## Patentansprüche

1. Verfahren zur Regelung des Elektrodenabstands in einem Vakuum-Lichtbogenofen (10), wobei ein Elektrodenabstand einer Schmelzelektrode gegenüber der Oberfläche eines Schmelzgutes in Abhängigkeit einer Tropfenkurzschlussrate geregelt wird,
**gekennzeichnet dadurch,**
**dass** ein Histogramm (70) detektierter Tropfenkurzschlüsse (80) auf Basis zumindest eines Tropfenkurzschlusskriteriums (76) erstellt wird, das Histogramm (70) in Teilbereiche (72) unterteilt wird, ein charakteristischer Teilbereich (74) des Histogramms (70) zu Regelungszwecken ausgewählt wird und ein Elektrodenabstand auf Basis der dem ausgewählten Teilbereich (74) zuordenbaren Tropfenkurzschlüssen (80) geregelt wird.

2. Verfahren nach Anspruch 1,
**dadurch gekennzeichnet,**
**dass** zur Auswahl eines charakteristischen Teilbereichs (74) eine Gewichtungsfunktion, bevorzugt in Abhängigkeit der Phase des Umschmelzvorgangs, auf die verschiedenen Teilbereiche (72) angewendet wird, und entsprechend des am stärksten gewichteten charakteristischen Teilbereichs (74) ein vorbestimmbares Reglerverhalten, insbesondere eine entsprechende Regelverstärkung und ein entsprechendes Reglerverhalten ausgewählt wird, wonach eine Regelung des Elektrodenabstands auf Basis des ausgewählten Reglerverhalten in Abhängigkeit der dem charakteristischen Teilbereich (74) zuordenbaren Tropfenkurzschlüsse (80) erfolgt.

3. Verfahren nach Anspruch 1 oder 2,
**dadurch gekennzeichnet,**
**dass** das Tropfenkurzschlusskriterium (76) zumindest einen Amplitudeneinbruchswert, eine Kurzschlusshäufigkeit, eine Kurzschlussdauer, einen Tropfenzeitabstand oder eine Amplitudenform umfasst, wobei der Kriteriumsparameter in zumindest zwei Teilbereiche (72) unterteilt ist.

4. Verfahren nach einem der vorangegangenen Ansprüche,
**dadurch gekennzeichnet,**
**dass** das Histogramm (70) zumindest zwei Tropfenkurzschlusskriterien (76) abbildet, so dass ein Teilbereich (72) ein zwei- oder mehrdimensionaler Teilbereich (72) ist.

5. Verfahren nach einem der vorgenannten Ansprüche,
**dadurch gekennzeichnet,**
**dass** ein charakteristischer Teilbereich (74) bei Beginn oder in vorbestimmbaren Phasen des Umschmelzvorgangs neu ausgewählt wird, wobei bevorzugt eine teilbereichsbezogene Regelung nur in bestimmten Phasen des Umschmelzvorgangs vorgenommen wird.

6. Verfahren nach einem der vorgenannten Ansprüche,
**dadurch gekennzeichnet,**
**dass** das Histogramm (70) während zumindest einer Phase des Umschmelzvorgangs wiederholt, insbesondere laufend neu erstellt wird, und ein charakteristischer Teilbereich (74) zumindest bei einer voreinstellbaren Abweichung der Teilbereiche (72) des neu erstellten Histogramms (70) gegenüber dem bisherigen Histogramm (70) neu ausgewählt wird.

7. Verfahren nach Anspruch 3,
**dadurch gekennzeichnet,**
**dass** ein Spannungsamplitudeneinbruchswert als Tropfenkurzschlusskriterium (76) in einem Bereich von 1 mV bis 15 Volt, bevorzugt 5 mV bis 6 Volt, insbesondere 1 bis 3 Volt erfasst wird.

8. Verfahren nach Anspruch 3,
**dadurch gekennzeichnet,**
**dass** eine Kurzschlussdauer als Tropfenkurzschlusskriterium (76) in einem Bereich von 0.3 µs bis 300 ms, bevorzugt 3 µs bis 30 ms, insbesondere 10 µs bis 70 µs erfasst wird.

9. Verfahren nach Anspruch 3,
**dadurch gekennzeichnet,**
**dass** eine Amplitudenform durch eine Multiskalendarstellung, insbesondere durch eine Wavelet-Transformation des Tropfenkurzschlusssignals (82) beschrieben wird, wobei die Multiskalendarstellung als Amplitudenformkriterium verwendet wird.

10. Verfahren nach einem der vorgenannten Ansprüche,
**dadurch gekennzeichnet,**
**dass** bei der Detektion der Tropfenkurzschlüsse (80) Störungen des Versorgungsnetzes berücksichtigt werden.

11. Vorrichtung (40) zur Regelung des Elektrodenabstands in einem Vakuum-Lichtbogenofen (10) umfassend eine Tropfenkurzschluss-Detektionseinrichtung (44) zur Detektion von Tropfenkurzschlüssen (80) und eine Elektrodenabstands-Regeleinrichtung (46) zur Regelung des Elektrodenabstands einer Schmelzelektrode (30) gegenüber der Oberfläche eines Schmelzgutes (32), wobei die Regeleinrichtung (46) den Elektrodenabstand in Abhängigkeit der detektierten Tropfenkurzschlüsse (80) regelt,
**gekennzeichnet dadurch,**
**dass** eine Tropfenkurzschluss-Histogrammeinrichtung (48) zur Verteilung der Kurzschlüsse nach zumindest einem vordefinierbaren Tropfenkurzschlusskriterium (76) in einem Histogramm (70) und eine Teilbereich-Auswahleinrichtung (50) zur Auswahl eines charakteristischen Teilbereichs (74) aus dem Tropfenkurzschluss-Histogramm (70) umfasst ist, wobei die Regeleinrichtung (46) eine Regelung in Bezug auf den dem charakteristischen Teilbereich (74) zuordenbaren Tropfenkurzschlüssen (80) vornehmen kann.

12. Vorrichtung nach Anspruch 11,
**dadurch gekennzeichnet,**
**dass** die Teilbereich-Auswahleinrichtung (50) eine Teilbereichsdefinitionseinheit (52) zur Definition von Tropfenkurzschluss-Teilbereichen (72) des Histogramms (70) und eine Gewichtungsfunktionseinheit (54) zur Gewichtung der Teilbereiche (72) des Histogramms (70) umfasst, so dass ein am stärksten gewichteter Teilbereich (72) als charakteristischer Teilbereich (74) auswählbar ist.

13. Vorrichtung nach Anspruch 11 oder 12,
**dadurch gekennzeichnet,**
**dass** eine Regelparameter-Auswahleinrichtung (56) umfasst ist, die auf Basis des charakteristischen Teilbereichs (74) einen Satz von Regelparametem, insbesondere Regelverstärkung und Regelverhalten auswählt und der Regeleinrichtung (46) zuweist.

14. Vorrichtung nach einem der Ansprüche 11 bis 13,
**dadurch gekennzeichnet,**
**dass** die Tropfenkurzschluss-Detektionseinrichtung (44) eine Netzspannungsfiltereinheit (58) umfasst, die Störungen des Versorgungsnetzes (42) bei der Tropfenkurzschlussdetektion unterdrücken kann.

## Claims

1. A method for closed-loop control of the electrode gap in a vacuum arc furnace (10), wherein an electrode gap of a melting electrode from the surface of a melt material is subjected to closed-loop control as a function of a droplet short-circuit rate,
**characterised in that**
a histogram (70) of detected droplet short-circuits (80) is created on the basis of at least one droplet short-circuit criterion (76), **in that** the histogram (70) is subdivided into sub-areas (72), **in that** a characteristic sub-area (74) of the histogram (70) is selected for closed-loop control purposes, and **in that** an electrode gap is subjected to closed-loop control on the basis of the droplet short-circuits (80) which can be associated with the selected sub-area (74).

2. The method according to claim 1,
**characterised in that**
for selecting a characteristic sub-area (74), a weighting function, preferably as a function of the phase of the remelting process, is applied to the different sub-areas (72), and **in that**, corresponding to the most strongly weighted characteristic sub-area (74), a predeterminable controller behaviour, in particular a corresponding closed-loop control amplification and a corresponding controller behaviour, is selected, whereupon closed-loop control of the electrode gap is realized on the basis of the selected controller behaviour as a function of the droplet short-circuits (80) which can be associated with the characteristic sub-area (74).

3. The method according to claim 1 or 2,
**characterised in that**
the droplet short-circuit criterion (76) comprises at least an amplitude drop value, a short-circuit frequency of occurrence, a short-circuit duration, a droplet interval or an amplitude profile, wherein the criterion parameter is subdivided into at least two sub-areas (72).

4. The method according to one of the preceding claims,
**characterised in that**
the histogram (70) represents at least two droplet short-circuit criteria (76), such that a sub-area (72) is a two-dimensional or multidimensional sub-area (72).

5. The method according to one of the preceding claims,
**characterised in that**
a characteristic sub-area (74) is newly selected at the beginning or in predeterminable phases of the remelting process, wherein preferably, a closed-loop control based on sub-areas is performed only in specific phases of the remelting process.

6. The method according to one of the preceding claims,
**characterised in that**
the histogram (70) is repeated during at least one phase of the remelting process, is in particular continuously newly created, and **in that** a characteristic sub-area (74), at least in the case of a deviation of the sub-areas (72) of the newly created histogram (70) with respect to the previous histogram (70), which deviation can be preset, is newly selected.

7. The method according to claim 3,
**characterised in that**
a voltage amplitude drop value is recorded as a droplet short-circuit criterion (76) in a range of 1 mV to 15 Volts, preferably 5 mV to 6 Volts, in particular 1 to 3 Volts.

8. The method according to claim 3,
**characterised in that**
a short-circuit duration is recorded as a droplet short-circuit criterion (76) in a range of 0.3 µs to 300 ms, preferably 3 µs to 30 ms, in particular 10 µs to 70 µs.

9. The method according to claim 3,
**characterised in that**
an amplitude profile is described by a multi-scale diagram, in particular by a wavelet transform of the droplet short-circuit signal (82), wherein the multi-scale diagram is used as an amplitude profile criterion.

10. The method according to one of the preceding claims,
**characterised in that**
when detecting the droplet short-circuits (80), failures in the supply network are taken into account.

11. A device (40) for closed-loop control of the electrode gap in a vacuum arc furnace (10), comprising a droplet short-circuit detection device (44) for detecting droplet short-circuits (80) and an electrode gap closed-loop control device (46) for closed-loop control of the electrode gap of a melting electrode (30) from the surface of a melt material (32), wherein the closed-loop control device (46) subjects the electrode gap to closed-loop control as a function of the detected droplet short-circuits (80),
**characterised in that**
a droplet short-circuit histogram device (48) for distributing the short-circuits according to at least one predefinable droplet short-circuit criterion (76) in a histogram (70), and a sub-area selection device (50) for selecting a characteristic sub-area (74) from the droplet short-circuit histogram (70) are included, wherein the closed-loop control device (46) can perform a closed-loop control with regard to the droplet short-circuits (80) which can be associated with the characteristic sub-area (74).

12. The device according to claim 11,
**characterised in that**
the sub-area selection device (50) comprises a sub-area definition unit (52) for defining droplet short-circuit sub-areas (72) of the histogram (70), and a weighting function unit (54) for weighting the sub-areas (72) of the histogram (70), such that a most strongly weighted sub-area (72) can be selected as a characteristic sub-area (74).

13. The device according to claim 11 or 12,
**characterised in that**
a closed-loop control parameter selection device (56) is included which selects a set of closed-loop control parameters, in particular closed-loop control amplification and closed-loop control behaviour, on the basis of the characteristic sub-area (74), and attributes said parameters to the closed-loop control device (46).

14. The device according to one of the claims 11 to 13,
**characterised in that**
the droplet short-circuit detection device (44) comprises a network voltage filter unit (58) which can suppress failures in the supply network (42) during the droplet short-circuit detection.

## Revendications

1. Procédé servant au réglage de la distance des électrodes dans un four (10) à arc sous vide, dans lequel une distance entre une électrode de fusion et la surface d'une matière fondue est réglée en fonction d'un taux de courts-circuits provoqués par des gouttes,
**caractérisé en ce qu'**
un histogramme (70) des courts-circuits provoqués par des gouttes (80) détectés est établi sur la base d'au moins un critère (76) de courts-circuits provoqués par des gouttes, **en ce que** l'histogramme (70) est divisé en sous-parties (72), **en ce qu'**une sous-partie (74) caractéristique de l'histogramme (70) est choisie à des fins de réglage, et **en ce qu'**une distance des électrodes est réglée sur la base des courts-circuits provoqués par des gouttes (80) qui peuvent être attribués à la sous-partie (74) choisie.

2. Procédé selon la revendication 1,
**caractérisé en ce qu'**
une fonction de pondération, de préférence en fonction de la phase du processus de refusion, est appliquée aux différentes sous-parties (72) afin de choisir une sous-partie (74) caractéristique, et **en ce qu'**un comportement de régulateur prédéterminable, en particulier une amplification de réglage correspondante et un comportement de régulateur correspondant, est choisi suivant la sous-partie (74) caractéristique ayant la pondération la plus forte, après quoi la distance des électrodes est réglée sur la base du comportement de régulateur choisi, en fonction des courts-circuits provoqués par des gouttes (80) qui peuvent être attribués à la sous-partie (74) caractéristique.

3. Procédé selon la revendication 1 ou 2,
**caractérisé en ce que**
le critère (76) de courts-circuits provoqués par des gouttes comprend au moins une valeur de chute d'amplitude, une fréquence de courts-circuits, une durée de courts-circuits, un intervalle entre des courts-circuits ou une forme d'amplitude, le paramètre de critère étant divisé en au moins deux sous-parties (72).

4. Procédé selon l'une quelconque des revendications précédentes,
**caractérisé en ce que**
l'histogramme (70) représente au moins deux critères (76) de courts-circuits provoqués par des gouttes, de façon qu'une sous-partie (72) soit une sous-partie (72) bidimensionnelle ou multidimensionnelle.

5. Procédé selon l'une quelconque des revendications ci-dessus,
**caractérisé en ce qu'**
une sous-partie (74) caractéristique est choisie de nouveau au début ou dans des phases prédéterminables du processus de refusion, un réglage relatif aux sous-parties de préférence étant seulement effectué dans certaines phases du processus de refusion.

6. Procédé selon l'une quelconque des revendications ci-dessus,
**caractérisé en ce que**
l'histogramme (70) est répété, est en particulier créé de nouveau de manière constante, pendant au moins une phase du processus de refusion, et **en ce qu'**une sous-partie (74) caractéristique est choisie de nouveau au moins en cas d'une divergence préréglable des sous-parties (72) de l'histogramme (70) qui a été créé de nouveau, par rapport à l'histogramme (70) précédent.

7. Procédé selon la revendication 3,
**caractérisé en ce qu'**
une valeur de chute d'amplitude de tension est enregistrée comme un critère (76) de courts-circuits provoqués par des gouttes entre 1 mV et 15 volts, de préférence entre 5 mV et 6 volts, en particulier entre 1 et 3 volts.

8. Procédé selon la revendication 3,
**caractérisé en ce qu'**
une durée de courts-circuits est enregistrée comme un critère (76) de courts-circuits provoqués par des gouttes entre 0.3 µs et 300 ms, de préférence entre 3 µs et 30 ms, en particulier entre 10 µs et 70 µs.

9. Procédé selon la revendication 3,
**caractérisé en ce qu'**
une forme d'amplitude est décrite par un diagramme multi-échelles, en particulier par une transformation en ondelettes du signal (82) de courts-circuits provoqués par des gouttes, le diagramme multi-échelles étant utilisé comme un critère de forme d'amplitude.

10. Procédé selon l'une quelconque des revendications ci-dessus,
**caractérisé en ce que**
des perturbations du réseau d'approvisionnement sont prises en compte lors de la détection des courts-circuits provoqués par des gouttes (80).

11. Appareil (40) servant au réglage de la distance des électrodes dans un four à arc sous vide (10), comprenant un dispositif de détection (44) de courts-circuits provoqués par des gouttes, ledit dispositif servant à détecter des courts-circuits provoqués par des gouttes (80), et un dispositif de réglage (46) de la distance des électrodes, ledit dispositif servant à régler la distance entre une électrode de fusion (30) et la surface d'une matière fondue (32), dans lequel le dispositif de réglage (46) règle la distance des électrodes en fonction des courts-circuits provoqués par des gouttes (80) détectés,
**caractérisé en ce que**
ledit appareil comprend une dispositif d'histogramme (48) de courts-circuits provoqués par des gouttes qui sert à distribuer les courts-circuits dans un histogramme (70) selon au moins un critère (76) de courts-circuits provoqués par des gouttes prédéfinissable, et un dispositif de choix de sous-parties (50) qui sert à choisir une sous-partie (74) caractéristique de l'histogramme (70) de courts-circuits provoqués par des gouttes, le dispositif de réglage (46) étant capable de régler quant aux courts-circuits provoqués par des gouttes (80) qui peuvent être attribués à la sous-partie (74) caractéristique.

12. Appareil selon la revendication 11,
**caractérisé en ce que**
le dispositif de choix de sous-parties (50) comprend une unité de définition de sous-parties (52) qui sert à définir des sous-parties (72) de l'histogramme (70) dans lesquelles des courts-circuits provoqués par des gouttes se produisent, et une unité de fonction de pondération (54) qui sert à pondérer les sous-parties (72) de l'histogramme (70), de façon qu'une sous-partie (72) ayant la pondération la plus forte puisse être choisie comme une sous-partie (74) caractéristique.

13. Appareil selon la revendication 11 ou 12,
**caractérisé en ce que**
ledit appareil comprend un dispositif de choix (56) de paramètres de réglage qui choisit un jeu de paramètres de réglage, en particulier l'amplification de réglage et le comportement de réglage, sur la base de la sous-partie (74) caractéristique, et assigne lesdits paramètres au dispositif de réglage (46).

14. Appareil selon l'une quelconque des revendications 11 à 13,
**caractérisé en ce que**
le dispositif de détection (44) de courts-circuits provoqués par des gouttes comprend une unité de filtrage (58) de tension de secteur qui peut supprimer des perturbations du réseau d'approvisionnement (42) lors de la détection de courts-circuits provoqués par des gouttes.
